# EUROPEAN PATENT APPLICATION

(11) **EP 4 265 470 A1**
(43) Date of publication of application: **25.10.2023**
(21) Application number: 23162529.4
(22) Date of filing: 17.03.2023
(51) Int. Cl.: B60L 53/68, B60L 58/12

(54) **VEHICLE CHARGING SYSTEM AND METHOD**

(30) Priority: 21.04.2022 US 202263333352 P; 06.03.2023 US 202318178647
(71) Applicant: Transportation IP Holdings, LLC, Norwalk, CT 06851 (US)
(72) Inventor: Kraeling, Mark, Bradshaw, Norwalk, 06851 (US); Gupta, Venu, Norwalk, 06851 (US); KUMAR, Ajith Kuttannair, Norwalk, 06851 (US)
(74) Representative: Laufhütte, Dieter

(57) **Abstract**

A charging system and method includes a controller that may obtain vehicle system characteristics and/or charger characteristics. The charging system may control a supply of electric power from one or more charging stations to one or more energy storage devices of one or more vehicle systems based at least in part on the vehicle system characteristics and the charger characteristics.

## Description

### CROSS-REFERENCE TO RELATED APPLICATIONS

This application claims priority to U.S. Provisional Application No. 63/333,352, filed 21-April-2022. The entirety of this application is incorporated herein by reference.

### BACKGROUND

### Technical Field.

The subject matter described herein relates to system and methods for charging electronic storage devices onboard a vehicle.

### Discussion of Art.

Some vehicles may have propulsion systems that are entirely or partially powered by electric energy stored onboard the vehicles in energy storage devices, such as in batteries. These vehicles can include all-electric vehicles that are entirely powered by electric energy stored in the storage devices and hybrid vehicles that are partially powered by electric energy stored in the storage devices and partially powered by electric energy generated by consumption of fuel (e.g., by way of an engine consuming fuel to operate and power an alternator that generates electric energy).

These vehicles may use charging stations that couple with the energy storage devices to supply electric voltage and/or current to the storage devices. But merely providing charging stations may miss opportunities for improving the efficiency by which individual vehicles and/or a network or fleet of vehicles may charge the storage devices. A need may exist for charging systems and methods that capitalize on opportunities for improving the efficiency by which vehicle energy storage devices are charged.

### BRIEF DESCRIPTION

In accordance with one aspect or example, a charging system includes a controller that may obtain vehicle system characteristics and/or charger characteristics. The charging system controls a supply of electric power from one or more charging stations to one or more energy storage devices of one or more vehicle systems based at least in part on the vehicle system characteristics and the charger characteristics.

In accordance with another aspect or example, a method includes obtaining one or more of vehicle system characteristics or charger characteristics. The vehicle system characteristics correspond to one or more vehicle systems, and the charger characteristics correspond to one or more charging stations. Each of the vehicle systems includes an energy storage device. A supply of electric power from the one or more charging stations to the energy storage devices of the one or more vehicle systems is controlled based at least in part on one or more of the vehicle system characteristics or the charger characteristics.

In another aspect or example, a vehicle charging system includes one or more charging stations configured to supply electric power to an energy storage device of a vehicle system, and a controller that controls the supply of the electric power from the one or more charging stations to the energy storage device of the vehicle system based at least in part on one or more of vehicle system characteristics or charger characteristics. The controller predicts a state of charge of the energy storage device of the vehicle system prior to the vehicle system arriving at the one or more charging stations based at least in part on the vehicle system characteristics. The controller assigns the vehicle system to at least one of the one or more charging stations based at least in part on the state of charge of the energy storage device.

### BRIEF DESCRIPTION OF THE DRAWINGS

The inventive subject matter may be understood from reading the following description of non-limiting embodiments, with reference to the attached drawings, wherein below:
Figure 1 illustrates one example of a charging system in accordance with one embodiment;
Figure 2 illustrates one example of a vehicle system in accordance with one embodiment; and
Figure 3 illustrates one example of a charging station of the charging system shown in Figure 1.

### DETAILED DESCRIPTION

Embodiments of the subject matter described herein relate to vehicle charging systems and methods. In some embodiments, the system may control how, when, and/or where electric current is supplied to charge energy storage devices onboard vehicles. In some embodiments, the systems and methods may control how, when, and/or where fuels used by vehicles to generate electric energy are supplied to the vehicles (e.g., fuel for fuel cells, fuel for engines to power alternators, etc.).

The subject matter described herein extends to multiple types of vehicle systems. These vehicle systems may include one or more automobiles, trucks (with or without trailers), buses, marine vessels, aircraft, rail vehicles, mining vehicles, agricultural vehicles, or other off-highway vehicles. While one or more embodiments are described in connection with rail vehicle systems, not all embodiments relate to rail vehicle systems. The vehicle systems described herein (rail vehicle systems or other vehicle systems that do not travel on rails or tracks) can be formed from a single vehicle or multiple vehicles. With respect to multi-vehicle systems, the vehicles can be mechanically coupled with each other (e.g., by couplers), or can be logically coupled without being mechanically coupled. For example, vehicles may be logically but not mechanically coupled when the separate vehicles communicate with each other to coordinate movements of the vehicles with each other so that the vehicles travel together (e.g., as a convoy, swarm, platoon, fleet). Each vehicle system can represent a single vehicle system or a multi-vehicle system formed from two or more vehicles (which may be mechanically coupled with each other or mechanically separate from each other but that travel together as a convoy, swarm, group, or the like). The vehicle systems can be formed from rail vehicles (e.g., locomotives with or without rail cars, transit vehicles, etc.) or non-rail vehicles, such as automobiles, transport trucks (with or without trailers), buses, aircraft (e.g., fixed wing, drones, rotary wing, etc.), marine vessels, agricultural vehicles, mining vehicles, etc.

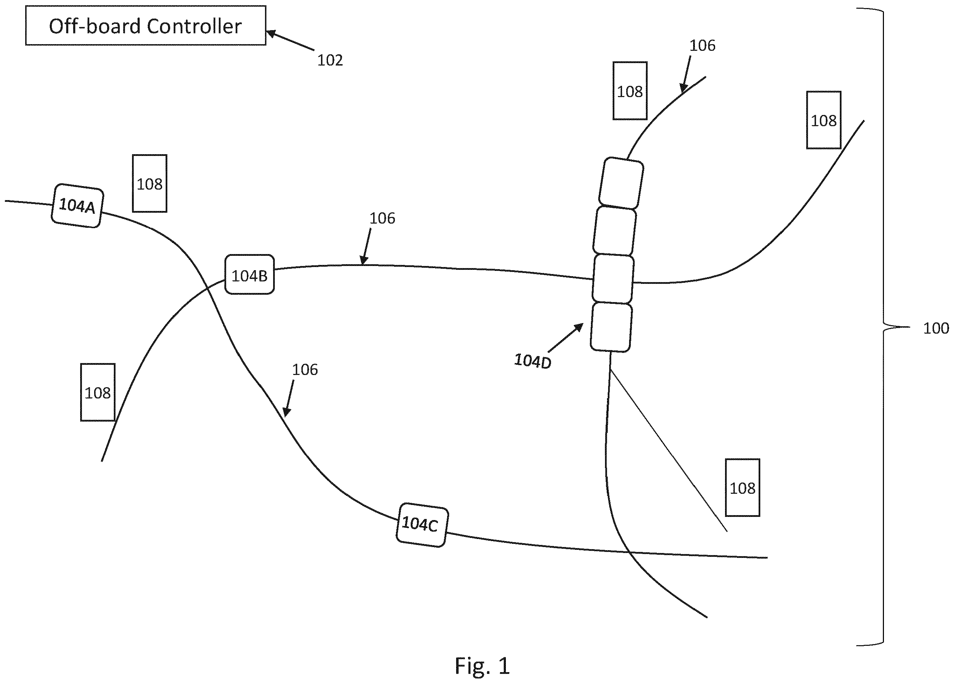

Figure 1 illustrates one example of a charging system 100 according to an embodiment of the invention. The charging system can include a controller 102 (a vehicle controller) that represents hardware circuitry that is coupled with and/or includes one or more processors (e.g., one or more microcontrollers, field programmable gate arrays, integrated circuits, or the like) that perform determined operations. The vehicle controller may be responsible for determined aspects of vehicle control, such as vehicle component operation, communication to and from the vehicle, coordination of the vehicle movement along routes and/or relative to other vehicles in the vehicle system (or vehicles in other vehicle system), and the like. The vehicle controller may add and subtract vehicles from the vehicle system, and may determine the order of the vehicles in the vehicle system. The vehicle controller may make route selections and control the vehicle(s) operations over the selected route. If the vehicle controller is off-board, the vehicle controller may be disposed at a dispatch facility, such as a back-office server, a data center, or the like. Although axiomatic, the vehicle controller is not onboard vehicle systems 104A-D moving along one or more routes 106 in a network of interconnected routes in one example. Alternatively, the vehicle controller may be disposed onboard one or more of the vehicles. The controller may include (or be coupled to) an off-board communication system (not shown) that can represent or include one or more antennas, modems, or the like, that support wired and/or wireless communication. In one or more embodiments, the vehicle controller may include a memory (not shown) or other data storage system.

The network of routes may have one or more charging stations 108 disposed at various wayside locations along the routes. A suitable charging station may be disposed at a vehicle yard, at a location where the vehicle systems are loaded and/or unloaded, wayside locations, and the like. The vehicle systems can move along the network of interconnected routes, and may receive electric power from one or more of the charging stations. In one embodiments, one or more of the vehicle systems may be electric vehicles that may be powered by electric energy. In another embodiment, one or more of the vehicle systems may be hybrid vehicles that may be powered by electric power and/or non-electric fuel. Non-electric fuel, in this sense may include liquid and/or gaseous fuels. Suitable liquid fuels may include gasoline, kerosene, alcohol, diesel, and the like. Suitable gaseous fuels may include ammonia, hydrogen, natural gas, and the like).

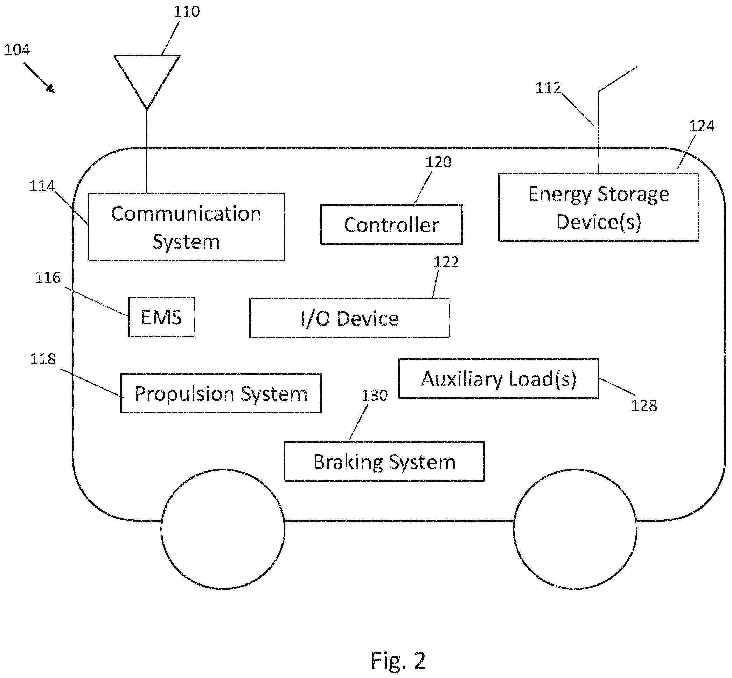

Figure 2 illustrates one example of one of the vehicles 104 shown in Figure 1. The vehicle can include an onboard controller 120 and one or more energy storage devices 124 that at least partially power propulsion systems 118 of the vehicle system. The onboard controller represents hardware circuitry that is coupled with and/or includes one or more processors that perform the operations described in connection with the onboard controller, such as by controlling movement of the vehicle by controlling operation of the energy storage device(s) and/or propulsion system. The onboard controller can generate and send control signals to the components of the vehicle system to control operation of these components.

The energy storage device(s) can represent battery cells, fuel cells, or the like. The fuel cell may store electrical energy in chemical form until ready to use. The propulsion system can represent one or more components that are powered to propel the powered system or vehicle system, such as motors. Optionally, the propulsion system can include an engine and/or alternator or generator that operates to separately provide electric energy to power loads of the powered system (e.g., the motors). Suitable energy storage devices may store energy that may be used to power auxiliary loads 128 of the vehicle system. The auxiliary loads can be powered by the energy storage devices and/or the propulsion system to perform work that does not propel the vehicle system. For example, the auxiliary loads can include display devices, monitoring devices (e.g., sensors), or the like.

In the illustrated embodiment, the vehicle system includes a collection device 112 that can conduct or otherwise receive electric power from a source that is outside of or off-board the vehicle. As one example, the collection device can be a pantograph that receives electric power from an electrified catenary. As another example, the collection device can be a conductive shoe or brush that receives current from an electrified rail. Optionally, the collection device can be a conductive coil that wirelessly receives energy through induction. In another example, the collection device can be a connector, cable, or the like. A suitable collection device may be selectively couplable to a source of power (e.g., a cable that can be coupled with an outlet of a utility grid, or a wayside energy storage device). In another example, the collection device can be a receiving plug or outlet that can receive or be coupled with a cable or connector of the source of the power.

A communication system 114 represents receiving, transmitting, and/or transceiving circuitry that can communicate with one or more devices that are onboard and/or off-board the vehicle system. The communication system can represent or include one or more antennas 110, modems, or the like, that support wired and/or wireless communication. For example, the communication system can be used by the onboard controller and/or other components of the vehicle system to wirelessly communicate. The communication may be with off-board locations (e.g., the vehicle controller, wayside charging stations, train yards, or the like). The communication may be with other vehicles in the vehicle system.

An energy management system 116 ("EMS" shown in Figure 1) may be included in the vehicle system. The energy management system can represent hardware circuitry that includes and/or is connected with one or more processors. This circuitry and/or processors may be the same as or separate from (e.g., in addition to) the circuitry and/or processors of the controller. The energy management system determines operational plans for the vehicle system to achieve one or more goals within designated constraints. As one example, the energy management system can determine a trip plan that dictates operational settings of the vehicle system at different locations, different times, different distances, etc., of upcoming travel of the vehicle system. These operational settings can cause the vehicle system to travel within the constraints (e.g., speed limits, forces exerted on the vehicle and/or the route, remaining a safe distance from other vehicles or objects, or the like) while driving the vehicle system toward achievement of the goal(s) (e.g., reducing fuel consumption, battery energy consumption, emission generation, etc.) relative to the vehicle system traveling within the constraints but using other settings. The operational settings can be throttle settings, brake settings, speeds, or the like.

The vehicle system may include a braking system 130. The braking system can represent one or more of friction brakes, air brakes, dynamic brakes (e.g., one or more of the traction motors of the propulsion system that also can generate braking effort via dynamic braking), or the like. In one or more embodiments, energy generated by the braking system via dynamic braking may be directed to the energy storage device where the energy may be stored for use within other systems of the vehicle system, or may be directed to a resistor grid (such as if the battery is at full capacity or the electrical generation is at a c-rate higher than desirable for a battery). The vehicle system may include an input and/or output device 122 ("I/O Device" in Figure 1) that can receive input from an operator and/or present information to the operator. The input and/or output device can represent an electronic display, touchscreen, keyboard, microphone, speaker, or the like.

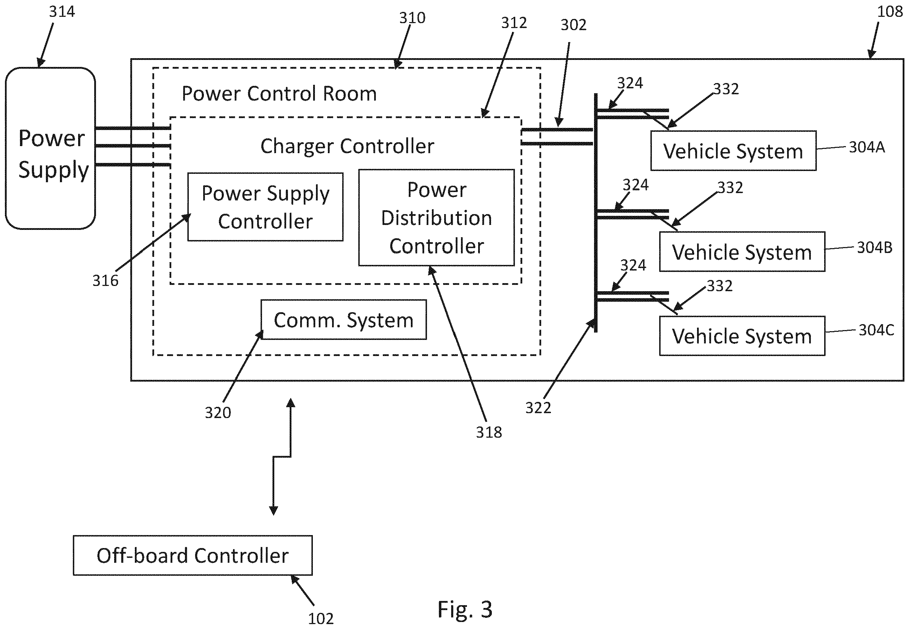

Figure 3 illustrates one example of one of the charging stations shown in Figure 1. The charging station includes a power control room 310, that may represent an enclosure, a housing, a structure, or the like. The power control room may be sized to allow for one or more components to be disposed therein, and one or more operators to move within the power control room, such as for maintenance, inspection, or repair. In one or more embodiments, the power control room may be a controlled environment such that the temperature, humidity, pressure, or the like, of the power control room are controlled. Optionally, the power control room may provide protection to the components disposed therein, such as protection from environmental conditions. Optionally, the power control room may have one or more security measures in place that may control and/or monitor individuals that may be allowed to access the power control room.

The charging station can include a charger controller 312 that represents hardware circuitry that is coupled with and/or includes one or more processors (e.g., one or more microcontrollers, field programmable gate arrays, integrated circuits, or the like) that perform the operations described in connection with the charger controller. In one embodiment, the charger controller may include and/or be separated into two or more different controllers, such as a power supply controller 316 and a power distribution controller 318. For example, the power supply controller may control the receipt of power from a power supply 314 to the charging station, and the power distribution controller may control the distribution of electric power to one or more vehicle systems 304A-C. Optionally, the charger controller may include processors, circuitry, or the like, to perform the operations of the power supply controller and the power distribution controller. For example, the power supply controller and the power distribution controller may be a single controller device of the charging station. The charging station can include a communication system 320 that may represent equipment that may support wired and/or wireless communication, such as with the vehicle systems, the vehicle controller, another charging station, or the like.

The power control room can also include circuit breakers, power transformers, rectifiers, or the like. In one embodiment, the charging station may include a three-phase AC circuit breaker, a three-phase power transformer, an active front end or other controllable rectifier, or the like. The primary voltage of the transformer may be compatible to be the charging station, and the secondary voltage may be three-phase 50 hertz, that is approximately 480 volts. The AC output of the power supply controller can be fed as input to the power distribution controller. The output of the power distribution controller may be variable voltage for charging the vehicle systems. Voltage, current, and power may be controlled based at least in part on the state of charge of the energy storage device(s) of the vehicle systems.

The charger controller is electrically coupled with an external power source 322 via one or more power distribution buses 302. The power distribution buses may be a series of cables and/or busbars from the power control room to charging devices 324 via the external power source 322. The external power source may represent cables, wires, buses, or the like, that electrically couple the power distribution buses 302 with the one or more charging devices, that may represent catenary lines, or the like. The charging station may include one or more support structures (not shown) that may be used to route the cables and busbars between the power control room and the vehicle systems.

Each vehicle systems includes a collection device 332 that electrically couples the vehicle system with the charging devices, such that the vehicle system receives electric power from the charging station via the charging devices. As one example, the collection devices may be pantographs that may receive electrical power from one of the catenary lines. The vehicle systems may include equipment to control the movement of the collection devices (e.g., pantographs) toward and away from the electrified devices.

In one or more embodiments, the charging devices may be stationary, rigid, or fixed busbar catenary structures that may be designed to interface with the collection device of the vehicle system. For example, the collection device of the vehicle may move toward and away from the charging devices, while the charging devices remain in substantially the same position or unmoved. The fixed charging structures may allow for the connection of one collection device of one vehicle system at a time, or optionally, the fixed charging devices structure may be capable of interfacing with plural vehicle systems at a time. In one or more embodiments, the charging devices may provide continuous DC charging to the vehicle systems electrically coupled therewith.

In one or more embodiments, the charger controller may communicate with the vehicle system to obtain vehicle system characteristics (e.g., energy storage characteristics of the energy storage device). The charging station may provide a DC output to the vehicle system via the power distribution buses, the external power source, and the charging devices that is compatible with substantially instantaneous requirements of the vehicle system. A suitable output voltage may nominally be in the range of about 400Vdc to about 750Vdc, with the current capability of approximately 1500A. In another suitable charging station, the output voltage may be in a different nominal range. A suitable with a current capability may be greater than 1500A. A suitable current capability may be less than 750 Vdc. The selection of such parameters may be made with reference to end use requirements.

In some embodiments, the charging station may include plural charging devices, having an arrangement of conductive wires, cables, or buses, or the like. Optionally, the charging station may include an energy management system that may manage the distribution of electric power from the power supply to the vehicle systems. Optionally, the charging station may include a memory or alternative data storage system. Optionally, the charging station may include one or more input and/or output devices, such as display and/or touch screens, keyboards, switches, or the like, that allow interaction between an operator of the charging station and one or more systems or components of the charging station. Optionally, the charger controller may have a local data collection system deployed and may use machine learning to enable derivation-based learning outcomes. The controllers may learn from and make decisions on a set of data (including data provided by the various sensors), by making data-driven predictions and adapting according to the set of data.

A suitable vehicle controller and/or charger controller may receive and monitor vehicle system characteristics of the vehicle systems that move along the routes of the interconnected system. Additionally, the vehicle controller and/or the charger controller can receive and monitor charger characteristics of the one or more charging stations disposed at wayside locations along the routes. The vehicle controller may communicate with the vehicle systems (e.g., the energy management systems onboard each of the vehicles), the charging stations (e.g., charging stations disposed along routes within the network of interconnected routes), a scheduling system (e.g., a system that schedules movement of the vehicle systems), a dispatch system, or the like, such as in a closed loop communication system. In one embodiment, the communication system may include secured communication protocols such that communication devices knowledgeable of the secured protocols may communicate with other communication devices within the secured closed loop communication system. In another embodiment, the communication system is an open loop system. In another embodiment, the communication is a feed forward system. In another embodiment, the communication is a feedback system. The controller may select which control system to use.

The vehicle controller may determine anticipated energy needs of the vehicle systems required for trips of the vehicle systems (e.g., before the vehicle system begins a trip, while the vehicle system is moving along the route, etc.), and may plan where and/or when the vehicles receive electric power, and/or an amount of electric power the vehicle systems may receive from the charging stations disposed along the route. The vehicle controller may plan where, when, and/or how much electric power the vehicle systems may receive based at least in part on vehicle system characteristics (including energy storage characteristics associated with the onboard energy storage device(s)), charger characteristics, trip and/or route characteristics, environmental conditions, economical characteristics, or the like. The vehicle controller may consider the one or more of the vehicle system characteristics, the charger characteristics, trip and/or route characteristics, or the environmental conditions in order to plan where and/or when the vehicles receive electric power (e.g., current) from the one or more charging stations disposed along the routes. For example, instead of the vehicles merely stopping at a charging station (e.g., the closest available, such as in the direction of movement of the vehicle system), fully charging the energy storage device onboard the vehicle systems, and then continuing to move until additional energy is needed, the vehicle controller can coordinate when and/or where the vehicle systems obtain energy, and/or how much energy the vehicle systems may receive, to charge the energy storage device based at least in part on the characteristics that are monitored. As another example, the vehicle controller may determine that the vehicle system should bypass the next available charging station in favor of receiving electric power from another charging station located a greater distance away from the vehicle system. For example, the closer charging station may have fewer charging connections available or may charge at a different or slower rate relative to the charging station located a further distance away.

The vehicle system characteristics may include information associated with the vehicle system such as, but not limited to, the size (e.g., weight) of the vehicle (along with the weight carried by the vehicle, such as passenger weight, cargo weight, etc.), a propulsion load, energy storage characteristics (e.g., available storage space of the energy storage device(s), type(s) of energy storage device(s), charging profiles of the energy storage device(s), or the like), the auxiliary load(s) of the vehicle systems, or the like. Optionally, the vehicle system characteristics may include information associated with scheduled movements of the vehicles, predicted or anticipated movements of the vehicles, vehicle load states, route conditions, and the like.

The charger characteristics may include information associated with the charging stations such as, but not limited to, a utilization and/or availability status of the charging stations (e.g., whether the charging stations are in use by a vehicle system or are scheduled for use by a vehicle system), a power capacity of the charging stations, a supply of power of the charging stations, a number of chargers disposed at each charging station, charging profiles of the charging stations (e.g., a charging rate at which the charging station is capable of providing power to the energy storage device), temperatures of the charging stations, or the like. In one or more embodiments, the charger characteristics may include an availability of the charging stations (e.g., an availability of chargers at a charging station, availability of different charging stations, or the like). In one or more embodiments, the charger controller and/or the vehicle controller may predict a remaining useful life of the charging station or a change in a maximum charging rate of the electric power to the energy storage device based at least in part on the charging profiles, the temperatures, the charging rates, or the like, of the charging stations.

The trip and/or route characteristics may include the different grades of the routes to be traveled upon by the vehicle system, speeds at which the vehicle is planned to travel or can travel along the routes, curvatures of routes to be traveled, or the like. In one or more embodiments, the trip characteristics may be associated with one or more upcoming segments of a trip for the vehicle system. The environmental conditions that may be considered by the vehicle controller may include geospatial locations in which the vehicle system is expected to travel and corresponding environmental conditions (e.g., distance above sea level, ambient climate conditions such as temperature, humidity, and pressure, or the like), wind speeds, an expectation of precipitation, or the like.

The vehicle controller can examine the vehicle system characteristics, the charger characteristics, the trip characteristics, and/or the environmental conditions, and may calculate how much stored energy may be needed to power a vehicle system through an upcoming segment of a trip. As one example, the vehicle controller can determine that a vehicle may be scheduled to travel through or is traveling toward a first route segment having a downhill grade. If the vehicle has the ability to dynamically brake and generate electric current through regenerative braking, then the vehicle controller can calculate or estimate an amount of energy that the vehicle may be able to generate and store in the onboard energy storage device through regenerative braking through the downhill route segment. The vehicle controller can then determine that, because of the ability for the vehicle to obtain additional electric energy by dynamically braking in the downhill route segment, the vehicle may not need to stop at a closer charging station but may be able to wait and travel to a farther charging station to obtain additional electric energy. The vehicle controller can communicate (e.g., via wireless signals) with the onboard controller to instruct the onboard controller to dynamically or regeneratively brake during travel through the downhill route segment and/or to recommend passing the closer charging station due to obtaining energy from this braking.

In one or more embodiments, the vehicle controller may determine a schedule change for one or more vehicle systems to charge at one or more charging stations based at least in part on the vehicle system characteristics, the charger characteristics (e.g., the charger characteristics of the charging station where the vehicle system is to recharge), the trip characteristics, the environmental conditions, or the like. For example, a vehicle system may be scheduled to charge at a first charging station, and the vehicle controller may determine to change a schedule for the vehicle system to charge at a different, second charging station based at least in part on one or more of the vehicle system characteristics, the charger characteristics (e.g., of the first and second charging stations), the trip characteristics (e.g., the portion of the trip between the first and second charging stations), the environmental conditions (e.g., environmental conditions at the first charging station relative to the environmental conditions at the second charging station), or the like.

As another example, the vehicle controller can determine that a vehicle may be scheduled to travel through or is traveling toward a second route segment where the vehicle can generate electric energy using dynamic or regenerative braking. This route segment may differ from the downhill first route segment as the second route segment may not have a downhill grade (e.g., the grade may be flat). Alternatively, the second route segment may have a downhill grade. The vehicle controller can determine that the vehicle can both generate propulsion via the onboard propulsion system while concurrently or simultaneously braking to generate current via regenerative braking. While this may consume fuel in hybrid vehicles to generate sufficient propulsion to allow for regenerative braking, the cost of the fuel that is consumed may be an acceptable loss or cost when compared with the electric energy that is generated, the distance to the next available charging station, and/or the benefit gained (in terms of time, throughput, etc.) in terms of being able to wait until a farther charging station to stop and charge the energy storage device.

As another example, the vehicle controller may obtain the trip characteristics of the route along which at least one vehicle system is expected or planning to take. The vehicle controller may determine a make-up of what vehicles are to be included, or what vehicles are to be excluded from the vehicle system based at least in part on the charger characteristics and/or the trip characteristics. Optionally, the make-up of the vehicles to include or exclude may be based at least in part on the energy storage characteristics of the energy storage device of the vehicles. For example, the energy storage characteristics may include a number of energy storage devices onboard each vehicle being considered to be included or excluded, historical information associated with each of the energy storage devices, types, makes, or models of the different energy storage devices, charging rates of each of the different storage devices, an amount of energy the storage device(s) may contain (e.g., an amount of power corresponding to the full state of charge of the energy storage device), or the like. As used herein, a full state of charge may be a determined state of charge that is less than the theoretical limit of charge for an energy storage device. As such, the "full state" of a new battery and a used battery may differ. Based on select factors, such as type of battery, history of use, environmental conditions, and the like the controller may determine what is a full state of charge for an energy storage device or for plural, coupled energy storage devices. In one embodiment, the vehicle controller may consider vehicle system characteristics of each of the vehicles being considered to be included or excluded from the vehicle system (e.g., type of vehicle, age of vehicle, size and weight of the vehicle, the type of cargo the vehicle can carry, an availability of different vehicles, or the like).

In one or more embodiments, the vehicle controller may communicate with a vehicle storage facility where plural vehicles may be stored, such as while the vehicle systems are not in use. The vehicle controller, the onboard controllers, and/or the charger controllers may communicate with the vehicle storage facility to provide the vehicle storage facility with the vehicle system characteristics, such as types of vehicles, current state of charge of each energy storage device onboard each of the vehicles, a readiness of the vehicles to be included in a make-up of a vehicle system, or the like. The vehicle storage facility may organize the vehicles within the storage facility based at least in part on the vehicle system characteristics, may recommend vehicles to be included or excluded in the make-up of a multi-vehicle vehicle system, may assign different priorities to the different vehicle systems based at least in part on the state of charge of each vehicle system, a state of health of the energy storage devices of the different vehicle systems, or the like. In one embodiment, the vehicle storage facility may recommend vehicles to be included or excluded in a vehicle system based at least in part on an expected trip plan of the vehicle system, which routes (e.g., grades, curves, etc.) the vehicle system is planning to take, opportunities for electric power efficiency, based at least in part on expected environmental conditions of the vehicle system, based at least in part on a length of the route that includes a catenary or third rail where the vehicle system may receive electric power while traveling along the length of the route, or the like. For example, a first vehicle may have a state of charge that is about 25% of the maximum state of charge of the first vehicle, and a second vehicle may have a state of charge that is about 85% of the maximum state of charge of the second vehicle. The vehicle storage facility may recommend that the second vehicle is included within the make-up of a vehicle system and may recommend that the first vehicle system is excluded from the make-up of the vehicle system based at least in part on the different states of charges of the first and second vehicles.

In one or more embodiments, at least one of the controllers may diagnose at least one of the vehicle systems based at least in part on one or more of the vehicle system characteristics, the charger characteristics, or the like. For example, the vehicle controller may receive vehicle system characteristics (e.g., including the energy storage characteristics), charging characteristics associated with the charging station and associated with charging station supplying electric power to the vehicle system. As used herein, the term diagnose means to determine a health state, an operating state, and/or a wear state of a component or system.

The vehicle controller may collect, store, and/or maintain the data received from the charging station and/or the vehicle system and may utilize the data to analyze one or more components or systems of the vehicle system and/or the charging station. In one embodiment, the vehicle controller may receive data from the charging station with every charge that occurs at the charging station, with every charge associated with a particular vehicle system, or the like. As one example, the vehicle controller may separately store data corresponding with individual charges. As another example, the vehicle controller may combine the data corresponding to every charging station, such as within the network of interconnected routes. Optionally, the vehicle controller may combine and/or separate data in an alternative manner.

In one embodiment, the vehicle controller may compare the received data with saved, historical data associated with the same charging station, and may diagnose the vehicle system and/or the charging station based at least in part on the comparison between the received (e.g., current) data and the historical data. The vehicle controller may provide maintenance and/or predictive recommendations of the vehicle system and/or the charging station based at least in part on the diagnosis of the vehicle system and/or the charging station. In another embodiment, the vehicle controller may analyze the received data from a charging starting point to a charging ending point associated with the starting and ending of charging the energy storage devices during a charging event. The vehicle controller may analyze the data across the charging event to diagnose a component and/or system of the vehicle system and/or the charging station. In one or more embodiments, the vehicle controller may determine that the component and/or the system of the vehicle system and/or the charging station requires maintenance or repair. In another embodiment, the vehicle controller may direct the vehicle system to remain at the charging station until the component and/or the system is repaired or replaced. Optionally, the vehicle controller may direct the vehicle system to travel to a maintenance shed or yard, where maintenance and/or repair may be performed on the vehicle system.

Optionally, the charger controller may receive the vehicle system characteristics, and may analyze the charger characteristics and vehicle system characteristics to diagnose the charging station. In one or more embodiments, the charger controller may determine that the diagnoses requires maintenance and/or repair to the charging station. The charging station may communicate with the vehicle controller and/or the vehicle systems moving along the network of routes that the charging station is unavailable. For example, the charging station may communicate that charging station is not allowing vehicle systems to stop and recharge, an estimated time of completion of the repair and/or maintenance, a recommendation of an alternative charging station where the vehicle system may stop to recharge, or the like.

In one or more embodiments, the vehicle controller may analyze at least some of the stored charging data and may determine and recommend placement locations for current and/or future charging stations. For example, the vehicle controller may determine that a charging station positioned at a first location was frequented by a number of vehicle systems that exceeded a determined threshold. The vehicle controller may recommend adding additional chargers to the charging station to accommodate the number of vehicle systems stopping at the charging station to recharge. As another example, the vehicle controller may determine that vehicle systems traveling along a portion of a route between a first charging station and a second charging station were arriving at the second charging station with an amount of stored energy in the energy storage devices that was below a recommended threshold. The vehicle controller may recommend placing another charging station at a location between the first and second charging stations along the route. The recommended placement of new charging stations, or change of location of existing charging stations, may optimize the location of the charging stations, such as to reduce a delay in vehicle systems being recharged, or the like.

The vehicle controller can examine the locations of charging stations relative to the scheduled or anticipated routes on which the vehicle systems are to travel to determine when and/or where vehicles should stop to charge one or more of the energy storage devices. In one embodiment, the vehicle controller may communicate instructions to the vehicle systems directing the vehicle systems how to operate the vehicle systems (e.g., to change an operating setting such as a throttle or brake setting) in order to conserve energy stored within the energy storage devices onboard the vehicle system, to allow the vehicle system to reach a target charging station, where the energy storage devices will receive electric power from the charging station. In another embodiment, the vehicle controller may remotely control operation of the vehicle system (e.g., without operator participation onboard the vehicle system) to change an operating setting of the vehicle system.

Responsive to the vehicle systems arriving at the charging station and being electrically coupled with the charging station, the vehicle controller and/or the charger controller may control operation of the charging station to control the supply of electric power to the energy storage device(s). For example, the vehicle controller may communicate control signals to the charging station to control the supply of electric power, may remotely control operation of the charging station, or the like. Optionally, the vehicle controller may communicate control signals to the charging stations via the onboard controller of the vehicle system, via an alternative vehicle control system that is off-board the vehicle system, or the like.

The supply of electric power from the charging station to the energy storage device(s) may be based at least in part on the vehicle system characteristics (e.g., the charging profile of the one or more energy storage devices, a rate at which the energy storage devices may receive power, a maximum amount of power each energy storage device may receive, or the like) and/or the charger characteristics (e.g., a power capacity of the charging station, the charging rate at which the charging station may provide electric power, the amount of electric power available, a schedule for the charging station to provide power to another vehicle system, or the like). Optionally, the supply of power to the vehicle system may be based at least in part on a number of vehicle systems operating within the network of interconnected routes. Optionally, the supply of power may be based at least in part on a number of vehicle systems that may receive electric power from the same charging station (e.g., simultaneously, during a concurrent time period, within a determined range of time, or the like).

In one or more embodiments, the vehicle controller, the onboard controller of the vehicle system, and/or the charger controller may determine a charging profile for charging one or more of the energy storage devices of the vehicle system. The charging profiles may provide instructions for supplying the electric power from the charging station to the energy storage devices. The charging profiles of each of the energy storage devices may be based at least in part on the vehicle system characteristics, the charger characteristics, or the like, that are obtained. The charging profile may include a current state of charge of the energy storage devices, an upper charging limit of the device (e.g., a maximum state of charge), a rate at which the energy storage device may receive electric power, a temperature of the energy storage device, a back electromagnetic frequency (EMF) signal indicative of resistance of the energy storage device, or the like. Optionally, the vehicle controller may determine the charging profile, and may assign one or more vehicle systems to charge at one of the charging stations based at least in part on the state of charge of the energy storage device. Optionally, the charging profiles may be determined based at least in part on historical charging profile data associated with the corresponding energy storage device. The energy storage devices may be charged according to the charging profile determined for each of the energy storage devices.

In one or more embodiments, the charger controller may determine the charging profile of the energy storage devices, and may communicate the charging profiles associated with the energy storage devices to the vehicle controller. Optionally, the vehicle controller may obtain energy storage characteristics (e.g., from the vehicle systems, from the charging station, or the like) that include the charging profiles of the energy storage devices. In one or more embodiments, the energy storage characteristics may include a temperature of the energy storage devices, a charging rate at which the charging stations will and/or have supplied electric power to the energy storage devices, a back electromagnetic frequency (EMF) signal indicative of resistance of the energy storage devices, or the like. The vehicle controller may store the energy storage characteristics and/or charging profiles in a memory or other data storage system. In one or more embodiments, the vehicle controller may predict a remaining useful life of the energy storage device, a reduced performance of the energy storage device, failures in the energy storage device, a change in a maximum state of charge of the energy storage device based at least in part on the charging profiles. In one or more embodiments, the vehicle controller and/or the onboard controller may predict a state of charge of the energy storage device, identify a change in a maximum state of charge, or the like, prior to the vehicle system arriving at the one or the charging stations.

In one or more embodiments, the charger controller may determine the charging profiles, and may communicate a notification to a dispatch center (e.g., a back-office server), a scheduling system, or the like. As one example, each time a vehicle system is charged, the charger controller may communicate the charging profile of the energy storage device that was charged to the vehicle controller, a dispatch center, a back-office server, or the like. The charging profile communicated may include, among other things, a temperature of the energy storage device, a charging current, or the like. The charging profiles communicated to the dispatch center and/or the scheduling system may allow the dispatch center and the scheduling system to ensure that the vehicle systems will be able to continue to travel according to their schedules based at least in part on the charging profiles. For example, the charging profiles may indicate that the energy storage devices may receive a first amount of electrical power, but the dispatch center and/or scheduling system may determine that the first amount of electrical power will not be sufficient to power the vehicle system to a target destination along the route. Optionally, the charging profiles (and associated data) may be stored and used for trending and predictive analytics of the energy storage device and/or the charging station.

In one or more embodiments, the charger controller and/or the vehicle controller may obtain environmental characteristics associated with the environments in which the charging stations are disposed. The environmental characteristics can include ambient temperature and humidity, barometric pressure, wind speeds, a time of day (e.g., evening or daytime), a percentage of cloud coverage, anticipated weather conditions (e.g., at charging stations when the vehicle system is expected to arrive at the charging station for recharging), or the like. The charger controller and/or the vehicle controller may direct the charging station to change a charging profile of the charging station at which the charging station charges the energy storage devices based at least in part on the environmental characteristics.

In one or more embodiments, the charger controller and/or the vehicle controller may obtain economical characteristics indicative of a financial cost of charging the energy storage devices. The economic costs may be based at least in part on energy prices (e.g., within a geographic region, or a comparison of energy prices between two different geographic regions), a cost associated with the cargo being transported by the vehicle system, a cost associated with delay in delivery of the cargo being transported (e.g., a penalty cost if the delivery is delayed, a reward if the delivery is ahead of schedule), or the like. The charger controller may change a charging profile for charging one or more of the energy storage devices based at least in part on the economical characteristics. Optionally, the vehicle controller may determine and send a change to a trip plan or a movement plan of one or more vehicle systems based at least in part on the charger characteristics and/or economical characteristics. For example, the vehicle controller may instruct the vehicle system to bypass an upcoming charging station in favor of another charging station further along the route. Optionally, the vehicle controller may determine a change to the trip plan for one or more vehicle systems based at least in part on the vehicle system characteristics and/or the charger characteristics.

The charger controller can communicate charging status updates with the vehicle controller and/or onboard controller of other vehicle systems. The charging status updates may inform the vehicle controller to a time when the vehicle system is expected to be fully charged (or charged to a charging limit). Optionally, the charging status update may indicate a time when the vehicle system is expected to depart from the charging station, such as to allow another vehicle system to arrive at the charging station and recharge. For example, the charging status update may be an estimation signal from the charging station that indicates an estimated trip completion for the vehicle system.

In one or more embodiments, the vehicle controller may receive the vehicle system characteristics, charger characteristics, trip characteristics, economical characteristics, and environmental conditions, and may change or adjust the trip plan for the vehicle system as the vehicle system moves along the route. Parameters that may be collected may include charge and/or discharge rates of the energy storage devices, temperatures and other environmental information, an expected charge level upon arrival at a target destination, or the like. For example, the parameters may be used to plan for charging station utilization (e.g., at which charging station the vehicle system should stop, etc.) prior to the vehicle system arriving at the charging station.

Optionally, the vehicle controller, a scheduling system, or an energy management system (EMS) of the vehicle system may change a trip plan of the vehicle system based at least in part on the charger characteristics and/or economical characteristics. For example, the onboard EMS of the vehicle system may change an operating setting (e.g., increase or decrease a speed of movement of the vehicle system) such as to preserve an amount of electric power until the vehicle system reaches the charging station, to utilize an increased amount of electric power by increasing the speed of the vehicle system to reach the charging station ahead of schedule, or the like. In one or more embodiments, the vehicle controller and/or the energy management system of the vehicle system may determine the change to the trip plan and/or movement plan based at least in part on a charging rate for a charging station (e.g., based at least in part on the charger characteristics), or a discharging rate of the energy storage device of the vehicle system based at least in part on the vehicle system characteristics. For example, the change in the trip plan may be to direct the vehicle system to stop and recharge at a closer charging station along the route than planned, such as based at least in part on the charging rate of the closer charging station.

In one or more embodiments, a priority of charging the energy storage device of a vehicle system may change responsive to changing the trip plan. For example, changing the trip plan may delay the time of arrival of the vehicle system at a target destination from the planned time of arrival. The priority for charging the vehicle system (e.g., relative to priorities of charging other vehicle systems) may change based at least in part on the changed trip plan. For example, the vehicle system may have a greater or higher priority relative to another vehicle system, and may be allowed to recharge at a charging station before the other vehicle system is allowed to recharge.

In the illustrated embodiment of Figure 3, the charging station includes three charging devices 324, that allows for at least three vehicle systems 304A-C to charge about simultaneously, or within a same window or time. In one or more embodiments, the charger controller and/or the vehicle controller may control the supply of the electric power from the charging station to the energy storage devices onboard each of the three vehicles. In one or more embodiments, the charging station may have one or more charger characteristics that may change based at least in part on the number of vehicle systems being recharged at substantially the same time. The charger controller and/or the vehicle controller may allocate the supply of the electric power among the two or more different vehicle systems that are being charged concurrently, at substantially the same time, within concurrent time periods, within a predetermined time window or period of time, or the like. For example, the allocation may be based at least in part on the vehicle system characteristics of each of the vehicle systems, the charger characteristics, characteristics of each of the charging devices, or the like.

In one or more embodiments, the charger controller and/or the vehicle controller may allocate the supply of electric power by preventing the energy storage device of at least one vehicle system from charging to a full state of charge before the vehicle system leaves the charging station. For example, the charger controller may control the supply of electric power to an energy storage device such that the energy storage device may only recharge to about 75% of the full state of charge of the energy storage device and may prevent or prohibit the energy storage device from recharging to about 100% of the full state of charge. In one embodiment, the amount of electric energy supplied to the energy storage devices may be based at least in part on a required amount of electric energy for the vehicle system to complete a trip, based at least in part on a required amount of electric energy for the vehicle system to reach another charging station (e.g., another charging station that has different economic costs relative to the current charging station), based at least in part on trip characteristics of the route between the current and upcoming charging station, a minimum threshold of electric energy that the vehicle system needs to have upon reaching a destinations, if the vehicle system is a hybrid vehicle system and is able to rely on an alternative energy source (e.g., gaseous or liquid fuel, or the like), or the like.

The charger controller and/or the vehicle controller may prevent the energy storage device from charging to the full state of charge by implementing a charging limit on the energy storage device. The charging limit may be based at least in part on a planned route of the vehicle system, an expected route of the vehicle system, an upcoming location of another charging station, a supply of charging stations in the upcoming locations, a demand for supply of the electric power from other vehicle systems, a demand for supply of the electric power from upcoming charging stations along the route, or the like.

In one or more embodiments, the charging station may have insufficient electric power to supply enough electric power to a first vehicle system stopped at the charging station for recharging. A second vehicle system stopped at the charging station for recharging may have a priority value that is less than a priority value of the first vehicle system. For example, it may be more important for the first vehicle system to receive the needed amount of electric power relative to the second vehicle system. As another example, it may be more important for the first vehicle system to reach its target destination before the second vehicle system. In one or more embodiments, the charging station may allocate a first amount of electric power to the higher priority first vehicle system, and the second vehicle system may electrically supply a second amount of electric power from one or more energy storage devices onboard the second vehicle system to the first vehicle system. For example, the first vehicle system may receive a portion of electric power from the charging station and a portion of electric power from the second vehicle system in order for the first vehicle system to receive a sufficient amount of electric power, to receive a sufficient amount of electric power within a predetermined time period, or the like.

In another embodiment, the charger controller may control the rate at which the electric power is supplied to the vehicle system. As one example, the electric power may be supplied at the fastest rate the charging device can supply the electric power, at the fastest rate the energy storage device is capable of receiving the electric power, or the like. As another example, the electric power may be supplied at a rate that is less than the fastest rate possible, such as to preserve the life of the energy storage device, based at least in part on an expected time of completion of recharging relative to a target time of arrival of the vehicle system at a target destination, based at least in part on one or more other vehicle systems being recharged within a concurrent time period, based at least in part on a priority of the vehicle system to be recharged (e.g., relative to a priority of another vehicle system to be recharged), or the like.

In one or more embodiments, the charger controller may communicate with the vehicle controller or another dispatch center (e.g., a back-office server) data associated with the vehicle systems, the charging stations, the environmental conditions, or the like. The vehicle controller may create or generate an application based at least in part on the obtained information, that may be used by operators or owners of vehicle systems, such as for upcoming trips. The application may change based at least in part on the user. As one example, a yard planner may access application information associated with the vehicle systems in the vehicle storage facility or yard that may indicate to the yard planner where and/or when the vehicle systems should be charged. As another example, a maintenance or repair individual may access application information associated with the status of the vehicle system (e.g., components and/or systems of the vehicle system), the charging station, or the like. Optionally, the maintenance individual may access diagnosis or prognosis information, recommended repair actions, or the like. The maintenance individual may update information available on the application associated with the maintenance work being completed on the vehicle system or charging station (e.g., estimated time of completion, estimated time indicating how long the vehicle system or charging station is unavailable, or the like). Optionally, operators of other vehicle systems may access the application information associated with the repair and/or maintenance of the charging station. The application may be accessible by multiple individuals, such as through a tablet, a smart phone, a computer, or the like, to inform operators about vehicle systems and charging stations.

In one embodiment, the controllers or systems described herein may have a local data collection system deployed and may use machine learning to enable derivation-based learning outcomes. The controllers may learn from and make decisions on a set of data (including data provided by the various sensors), by making data-driven predictions and adapting according to the set of data. In embodiments, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based at least in part on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based at least in part on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used making determinations, calculations, comparisons and behavior analytics, and the like.

In one embodiment, the controllers may include a policy engine that may apply one or more policies. These policies may be based at least in part on characteristics of a given item of equipment or environment. With respect to control policies, a neural network can receive input of a number of environmental and task-related parameters. These parameters may include, for example, operational input regarding operating equipment, data from various sensors, location and/or position data, and the like. The neural network can be trained to generate an output based at least in part on these inputs, with the output representing an action or sequence of actions that the equipment or system should take to accomplish the goal of the operation. During operation of one embodiment, a determination can occur by processing the inputs through the parameters of the neural network to generate a value at the output node designating that action as the desired action. This action may translate into a signal that causes the vehicle to operate. This may be accomplished via back-propagation, feed forward processes, closed loop feedback, or open loop feedback. Alternatively, rather than using backpropagation, the machine learning system of the controller may use evolution strategies techniques to tune various parameters of the artificial neural network. The controller may use neural network architectures with functions that may not always be solvable using backpropagation, for example functions that are non-convex. In one embodiment, the neural network has a set of parameters representing weights of its node connections. A number of copies of this network are generated and then different adjustments to the parameters are made, and simulations are done. Once the output from the various models are obtained, they may be evaluated on their performance using a determined success metric. The best model is selected, and the vehicle controller executes that plan to achieve the desired input data to mirror the predicted best outcome scenario. Additionally, the success metric may be a combination of the optimized outcomes, which may be weighed relative to each other.

In accordance with one aspect or example, a charging system may include a controller that may obtain vehicle system characteristics and/or charger characteristics. The charging system may control a supply of electric power from one or more charging stations to one or more energy storage devices of one or more vehicle systems based at least in part on the vehicle system characteristics and the charger characteristics.

The controller may operate with one or more of a vehicle energy management system, a dispatch system, or a scheduling system to determine anticipated energy needs of the one or more vehicle systems required for a trip. The controller may control the supply of power based at least in part also on the anticipated energy needs from the vehicle energy management system. The controller may determine a charging profile for one or more of the vehicle systems to charge one or more of the one or more energy storage devices at one or more of the one or more charging stations using the one or more of the vehicle system characteristics or the charger characteristics that are obtained. The controller may determine a schedule change for one or more of the vehicle systems to charge one or more of the one or more energy storage devices at one or more of the one or more charging stations using the one or more of the vehicle system characteristics or the charger characteristics that are obtained.

The controller may determine a change to a trip plan for one or more of the vehicle systems to charge one or more of the one or more energy storage devices at one or more of the one or more charging stations using the one or more of the vehicle system characteristics of the charger characteristics that are obtained. The trip plan may include operational settings of the one or more vehicle systems designated for one or more of different times, different locations, or different distances along one or more routes. The controller may diagnose at least one of the vehicle systems based at least in part on the vehicle system characteristics and/or the charger characteristics. The controller may diagnose at least one of the one or more charging stations based on the vehicle system characteristics and/or the charger characteristics. The controller may communicate control signals to control the supply of the electric power from the one or more charging stations to the one or more energy storage devices. The controller may communicate the control signals to the one or more charging stations via a vehicle control system that is off-board the vehicle systems and that coordinates allowable movements of the vehicle systems. The vehicle system characteristics may include one or more of a weight, a size, a propulsion load, energy storage system characteristics, or an auxiliary load of one or more vehicles in the one or more vehicle systems. The controller may control the supply of the electric power from the one or more charging stations to one or more of the one or more energy storage devices based at least in part on one or more other vehicle systems operating within a network of routes. The controller may control the supply of the electric power from the one or more charging stations to one or more of the one or more energy storage devices based at least in part on one or more of a utilization status or an availability status of the one or more charging stations.

The controller may control the supply of the electric power from the one or more charging stations to one of the one or more energy storage devices based at least in part on a power capacity of the one or more charging stations. The vehicle system may include one or more rail vehicles. Optionally, the vehicle system may include automobiles. Optionally, the vehicle system may include one or more transport trucks. The controller may allocate the supply of the electric power among two or more of the vehicle systems based at least in part on the vehicle system characteristics and/or the charger characteristics. The controller may allocate the supply of the electric power among the two or more vehicle systems at the one or more charging stations during a simultaneous or concurrent time period. The controller may allocate the supply of the electric power among the two or more vehicle systems by preventing the energy storage device onboard at least one of the vehicle systems from charging to a full state of charge before the at least one of the vehicle systems leaves the one or more charging stations. The controller may prevent the energy storage device from charging to the full state of charge by implementing a charging limit on the energy storage device. The charging limit may be based at least in part on one or more of a planned route of the at least one of the vehicle systems, an expected route of the at least one of the vehicle systems, an upcoming location of one or more of the one or more charging stations, a supply of the one or more charging stations in the upcoming location, or a demand for the supply of the electric power from the one or more of the one or more charging stations at the upcoming location.

The controller may receive charging profiles from the one or more charging stations that supply electric current to the one or more vehicle systems. The controller may predict one or more of a remaining useful life of the energy storage device, reduced performance of the energy storage device, failures in the energy storage device, or a change in a maximum state of charge of the energy storage device of one or more of the vehicle systems based at least in part on the charging profiles. The controller may obtain energy storage characteristics that include one or more charging profiles of the energy storage device. The controller may predict one or more of a remaining useful life of the energy storage device, reduced performance of the energy storage device, failures in the energy storage device, or a change in a maximum state of charge of the energy storage device of one or more of the vehicle systems based at least in part on the one or more charging profiles. The energy storage characteristics may include one or more of a temperature of the one or more energy storage devices, a temperature of a cable coupled to the one or more energy storage devices, a temperature of a connector of the charging device, a charging rate at which one or more of the one or more charging stations supply the electric power to one or more of the one or more energy storage devices, or a back electromagnetic frequency (EMF) signal indicative of resistance of one or more of the one or more energy storage devices. The controller may predict the one or more of the remaining useful like or one or more of the one or more energy storage devices, reduced performance of the energy storage devices, failures in the one or more energy storage devices, or the change in the maximum state of charge of one or more of the one or more energy storage devices based at least in part on the one or more of the temperature or the charging rate. The charger characteristics may include charging profiles of the one or more charging stations that supply electric power to the energy storage device of the one or more vehicle systems. The controller may predict one or more of a remaining useful like or a change in a maximum charging rate of the electric power to the energy storage device of one or more of the vehicle systems based at least in part on the charging profiles.

The charger characteristics may include one or more of a temperature of at least one of the one or more charging stations, a component of the one or more charging stations, or a charging rate at which the at least one of the one or more charging stations supply the electric power to the energy storage device. The controller may predict the one or more of the remaining useful life or the change in the maximum charging rate of the at least one of the one or more charging stations based at least in part on the one or more of the temperature or the charging rate. The controller may obtain one or more environmental characteristics and to change a charging profile at which one or more of the one or more charging stations charge the energy storage devices of the one or more vehicle systems based at least in part on the one or more environmental characteristics. The controller may obtain one or more economical characteristics indicative of a financial cost of charging one or more of the one or more energy storage devices of one or more of the vehicle systems. The controller may also determine and send a change to one or more of a trip plan or a movement plan of the one or more vehicle systems based at least in part on one or more of the charger characteristics and the economical characteristics, or change a trip plan of at least one of the vehicle systems based at least in part on the one or more of the charger characteristics or the economical characteristics. The controller may obtain one or more environmental characteristics, and may one or more of determine a send a change to one or more of a trip plan or a movement plan of the one or more vehicle systems based at least in part on one or more of the charger characteristics and the environmental characteristics, or change a trip plan of at least one of the vehicle systems based at least in part on the one or more of the charger characteristics or the environmental characteristics.

The controller may determine the change to the one or more of the trip plan or the movement plan based at least in part on one or more of a charging rate for one or more of the charging stations or the energy storage device, or a discharging rate of the vehicle system. The controller may predict a state of charge of the energy storage device of the one or more vehicle systems prior to the one or more vehicle systems arriving at the one or more charging stations based at least in part on the vehicle system characteristics, the charger characteristics, and one or more trip characteristics. The controller may assign the one or more vehicle systems to one or more of the one or more charging stations based at least in part on the state of charge of the energy storage device. The controller may obtain one or more trip characteristics and determine a make-up of vehicles in at least one of the vehicle systems based at least in part on the charger characteristics and the one or more trip characteristics. The one or more trip characteristics may be associated with one or more upcoming segments of a trip for at least one of the vehicle systems. The charger characteristics may include an availability of the one or more charging stations, and the trip characteristics may include one or more of grades or curvatures of routes to be traveled by the one or more vehicle systems. The controller may receive an estimation signal from one or more of the one or more charging stations. The estimation signal may indicate an estimated trip completion for at least one of the vehicle systems.

In accordance with another aspect or example, a method may include obtaining one or more of vehicle system characteristics or charger characteristics. The vehicle system characteristics correspond to one or more vehicle systems, and the charger characteristics correspond to one or more charging stations. Each of the vehicle systems includes an energy storage device. A supply of electric power from the one or more charging stations to the energy storage devices of the one or more vehicle systems may be controlled based at least in part on one or more of the vehicle system characteristics or the charger characteristics.

In another aspect or example, a vehicle charging system may include one or more charging stations configured to supply electric power to an energy storage device of a vehicle system, and a controller that controls the supply of the electric power from the one or more charging stations to the energy storage device of the vehicle system based at least in part on one or more of vehicle system characteristics or charger characteristics. The controller may predict a state of charge of the energy storage device of the vehicle system prior to the vehicle system arriving at the one or more charging stations based at least in part on the vehicle system characteristics. The controller may assign the vehicle system to at least one of the one or more charging stations based at least in part on the state of charge of the energy storage device.

As used herein, the terms "processor" and "computer," and related terms, e.g., "processing device," "computing device," and "controller" may be not limited to just those integrated circuits referred to in the art as a computer, but refer to a microcontroller, a microcomputer, a programmable logic controller (PLC), field programmable gate array, and application specific integrated circuit, and other programmable circuits. Suitable memory may include, for example, a computer-readable medium. A computer-readable medium may be, for example, a random-access memory (RAM), a computer-readable non-volatile medium, such as a flash memory. The term "non-transitory computer-readable media" represents a tangible computer-based device implemented for short-term and long-term storage of information, such as, computer-readable instructions, data structures, program modules and sub-modules, or other data in another device. Therefore, the methods described herein may be encoded as executable instructions embodied in a tangible, non-transitory, computer-readable medium, including, without limitation, a storage device and/or a memory device. Such instructions, when executed by a processor, cause the processor to perform at least a portion of the methods described herein. As such, the term includes tangible, computer-readable media, including, without limitation, non-transitory computer storage devices, including without limitation, volatile and non-volatile media, and removable and non-removable media such as firmware, physical and virtual storage, CD-ROMS, DVDs, and other digital sources, such as a network or the Internet.

As used herein, an element or step recited in the singular and proceeded with the word "a" or "an" do not exclude the plural of said elements or operations, unless such exclusion is explicitly stated. Furthermore, references to "one embodiment" of the invention do not exclude the existence of additional embodiments that incorporate the recited features. Moreover, unless explicitly stated to the contrary, embodiments "comprising," "comprises," "including," "includes," "having," or "has" an element or a plurality of elements having a particular property may include additional such elements not having that property. In the appended claims, the terms "including" and "in which" are used as the plain-English equivalents of the respective terms "comprising" and "wherein." Moreover, in the following claims, the terms "first," "second," and "third," etc. are used merely as labels, and do not impose numerical requirements on their objects. Further, the limitations of the following claims are not written in means-plus-function format and are not intended to be interpreted based on 35 U.S.C. § 112(f), unless and until such claims limitations expressly use the phrase "means for" followed by a statement of function devoid of further structure.

The above description is illustrative, and not restrictive. For example, the above-described embodiments (and/or aspects thereof) may be used in combination with each other. In addition, many modifications may be made to adapt a particular situation or material to the teachings of the inventive subject matter without departing from its scope. While the dimensions and types of materials described herein define the parameters of the inventive subject matter, they are exemplary embodiments. Other embodiments will be apparent to one of ordinary skill in the art upon reviewing the above description. The scope of the inventive subject matter should, therefore, be determined with reference to the appended claims, along with the full scope of equivalents to which such claims are entitled.

This written description uses examples to disclose several embodiments of the inventive subject matter, including the best mode, and to enable one of ordinary skill in the art to practice the embodiments of inventive subject matter, including making and using other devices or systems and performing an incorporated method. The patentable scope of the inventive subject matter is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

## Claims

1. A charging system comprising:
a controller configured to obtain one or more of vehicle system characteristics or charger characteristics, the vehicle system characteristics corresponding to one or more vehicle systems, the charger characteristics corresponding to one or more charging stations, each of the vehicle systems including an energy storage device,
the controller configured to control a supply of electric power from the one or more charging stations to the energy storage devices of the one or more vehicle systems based at least in part on one or more of the vehicle system characteristics or the charger characteristics.

2. The charging system of claim 1, wherein the controller is configured to operate with one or more of a vehicle energy management system, a dispatch system, or a scheduling system to determine anticipated energy needs of the one or more vehicle systems required for a trip, the controller configured to control the supply of the electric power from the one or more charging stations to the energy storage devices of the one or more vehicle systems based at least in part on the anticipated energy needs of the one or moe vehicles.

3. The charging system of claim 1, wherein the controller is configured to determine a charging profile for one or more of the vehicle systems to charge the one or more energy storage devices at the one or more charging stations based at least in part on one or more of the vehicle system characteristics or the charger characteristics.

4. The charging system of claim 1, wherein the controller is configured to determine a schedule for one or more of the vehicle systems to charge the one or more energy storage devices at the one or more charging stations based on one or more of the vehicle system characteristics or the charger characteristics.

5. The charging system of claim 1, wherein the controller is configured to determine a change to a trip plan for one or more of the vehicle systems, the trip plan including operational settings of the one or more vehicle systems designated for one or more of different times, different locations, or different distances along one or more routes, the controller configured to control the supply of the electric power to the one or more energy storage devices to charge the one or more energy storage devices at the one or more charging stations based at least in part on the change to the trip plan.

6. The charging system of claim 5, wherein the controller is configured to determine the change to the trip plan based at least in part on one or more of a charging rate for one or more of the charging station or the energy storage device, or a discharging rate of one or more of the vehicle systems.

7. The charging system of claim 1, wherein the controller is configured to control the supply of the electric power from the one or more charging stations to the one or more energy storage devices based at least in part on one or more of a utilization status or an availability status of the one or more charging stations.

8. The charging system of claim 1, wherein the controller is configured to control the supply of the electric power from the one or more charging stations to the one or more energy storage devices based at least in part on a power capacity of the one or more charging stations.

9. The charging system of claim 1, wherein the controller is configured to allocate a supply of the electric power of one or more of the charging stations among two or more of the vehicle systems based at least in part on one or more of the vehicle system characteristics or the charger characteristics.

10. The charging system of claim 9, wherein the controller is configured to allocate the supply of the electric power among the two or more vehicle systems by preventing the energy storage device onboard at least one of the vehicle systems from charging to a full state of charge before the at least one of the vehicle systems leaves the one or more charging stations.

11. The charging system of claim 10, wherein the controller is configured to prevent the energy storage device of the at least one of the vehicle systems from charging to the full state of charge by implementing a charging limit on the energy storage device of the at least one vehicle system.

12. The charging system of claim 1, wherein the controller is configured to obtain energy storage characteristics of the one or more energy storage devices that include charging profiles of the energy storage devices, the controller configured to predict one or more of a remaining useful life of the energy storage devices, reduced performance of the energy storage devices, failures in the energy storage devices, or a change in a maximum state of charge of the energy storage devices based at least in part on the energy storage characteristics of the one or more energy storage devices.

13. The charging system of claim 1, wherein the controller is configured to obtain one or more environmental characteristics and to change a charging profile at which one or more of the charging stations charge the one or more energy storage devices of the one or more vehicle systems based at least in part on the one or more environmental characteristics.

14. The charging system of claim 1, wherein the controller is configured to predict a state of charge of one or more of the energy storage devices of the one or more vehicle systems prior to the one or more vehicle systems arriving at the one or more charging stations based at least in part on the vehicle system characteristics.

15. A method, comprising:
obtaining one or more of vehicle system characteristics or charger characteristics, the vehicle system characteristics corresponding to one or more vehicle systems, the charger characteristics corresponding to one or more charging stations, each of the vehicle systems including an energy storage device; and
controlling a supply of electric power from the one or more charging stations to the energy storage devices of the one or more vehicle systems based at least in part on one or more of the vehicle system characteristics or the charger characteristics.
